# EUROPÄISCHE PATENTSCHRIFT

(11) **EP 2 133 538 B1**
(45) Veröffentlichungstag und Bekanntmachung des Hinweises auf die Patenterteilung: **12.12.2012**
(21) Anmeldenummer: 08010512.5
(22) Anmeldetag: 10.06.2008
(51) Int. Cl.: F02D 9/08, F02D 9/10, F02B 29/08, F16K 1/22, F02B 27/02

(54) **Gasführendes Drehventil mit Torsionsfeder**
Throttle valve provided with torsion spring
Vanne à papillon dotée d'un ressort de torsion

(43) Veröffentlichungstag der Anmeldung: 16.12.2009
(73) Patentinhaber: Hofmann, Arno, 63571 Gelnhausen (DE)
(72) Erfinder: Hofmann, Arno, 63571 Gelnhausen (DE)
(74) Vertreter: Quermann, Helmut

(56) Entgegenhaltungen:
- EP-A- 1 887 200
- WO-A-01/54146
- DE-A1- 10 334 475
- FR-A- 2 781 525

## Beschreibung

Die Erfindung betrifft ein gasführendes Drehventil mit einer Torsionsfeder als Energiespeicher, wobei ein Ende der Torsionsfeder an einem um eine Drehachse beweglichen Ventilsteuerkörper, der ein Ventilschließorgan und eine Welle aufweist, und das andere Ende der Torsionsfeder an einem Ort des Drehventils, der eine Verformung der Torsionsfeder beim Bewegen des Ventilsteuerkörpers erlaubt, befestigt ist.

Ein solches Drehventil zum Führen von Gas gelangt insbesondere in einer Frischgas- oder Abgasleitung einer Wärmekraftmaschine zur Anwendung.

Drehventile in der Bauart von Drehklappenventilen werden zunehmend in Frischgas- und Abgasleitungen von Wärmekraftmaschinen eingesetzt, um den entsprechenden Gasmassenfluss periodisch freizugeben bzw. zu unterbinden.

Drehklappenventile, die als schwingender Oszillator, d. h. als Feder-Masse-Schwinger ausgebildet werden, können sehr ohne Eigenfrequenzen über 200 Hertz erreichen. Diese Schaltfrequenzen erlauben es, z. B. beim Gaswechsel von Verbrennungsmotoren, das Drehklappenventil einmal oder mehrmals während eines Arbeitsspieles zu öffnen bzw. zu schließen. Damit ergibt sich eine große Freizügigkeit in der Gestaltung des Ladungswechsels.

Ein Drehventil der eingangs genannten Art, das als Drehklappenventil ausgebildet ist und in einer Frischgasleitung einer Wärmekraftmaschine Verwendung findet, ist aus der Zeitschrift MTZ, 12/2001, Seiten 998 bis 1009 unter dem Titel "Impulsaufladung und Laststeuerung von Hubkolbenmotoren durch ein Lufttaktventil" bekannt. Dort ist unter 4. ein Prototyp für Motorversuche beschrieben und im Bild 4 veranschaulicht, bei dem die Eigenfrequenz des schwingungsfähigen Feder-Masse-Systems von einer in der Ankerwelle untergebrachten Torsionsfeder sowie den Trägheitsmomenten von einem Schwenkanker und einer Klappe bestimmt wird. Die Bewegung des Schwingsystems wird dabei durch zwei unabhängig voneinander schaltbare Umkehrhubmagnete gesteuert, zwischen denen der Schwenkanker federunterstützt schwingt.

Weitere Drehklappenventile, die als Oszillator ausgelegt sind, insbesondere für den frischluftseitigen Einsatz, sind aus der DE 103 19 168 A1, bei der eine koaxiale Drehstabfeder verwendet wird, dem ATZ/MTZ-Fachbuch, "Ottomotor mit Direkteinspritzung", Sonderdruck Lufttaktventil ISBN 978-3-8348-0202-6, veröffentlicht im April 2007, bei dem gleichfalls eine koaxiale Drehstabfeder Verwendung findet sowie aus der DE 102 18 471 A1, bei der bei einem magnetisch steuerbaren Stellglied eine Spiralfeder verwendet wird, bekannt.

Die Vorteile der Torsionsfeder liegen in der Möglichkeit einer beidseitigen Auslenkung (geeignet für Oszillatoren) und geringster Federträgheitsmomente. Ein Ende der Torsionsfeder ist am Ventilgehäuse befestigt, das andere Ende mit dem drehbaren Ventilsteuerkörper verbunden. Nachteilig ist die unvermeidbare, große Federlänge und der Zwang der zum Ventilkörper konzentrischen Federanordnung. Dies bedingt die Ausbildung der Welle als Hohlwelle für die Federaufnahme und mehrteilige bzw. gewölbte Ventilklappengeometrien. Oftmals unterbricht die Hohlwelle bzw. Klappenwölbung ein in der Drehachse liegendes Dichtungssystem zwischen Ventilsteuerkörper und Ventilgehäuse. Die hier betrachteten Torsionsfedern besitzen kreisrunden Federquerschnitt. Die starke Wölbung der Hohlwelle bzw. die der korrespondierenden Ventilklappe verursacht beim Umströmen des gasförmigen Mediums Strömungsabriss und damit nennenswerten Druckverlust, entsprechend einem quer angeströmten Zylinderprofil.

Die Spiralfeder ist ein Derivat einer Schenkelfeder. Dieser Federtyp erlaubt zwar geringe axiale Bauhöhen, bedingt jedoch erhebliche radiale Ausmaße, um die erforderliche Windungszahl umzusetzen. Schenkelfedern dürfen wegen Bruchgefahr dynamisch nur einseitig (in Wickelrichtung), d. h. nicht wechselseitig belastet werden und müssen für den Einsatz an einem Oszillatorventil doppelt und gegeneinander wirkend ausgelegt werden. Insbesondere sind die erheblichen bewegten Massen von Schenkelfedern für schnellschaltende Drehventile als Nachteil zu bewerten.

Aus der FR 2 781 525 ist ein gasführendes Drehventil mit einer Schenkelfeder als Energiespeicher bekannt. Diese Schenkelfeder wird in Betrieb des Drehventils auf Biegung beansprucht.

Ziel der Erfindung ist es, eine Federgeometrie zu entwerfen, die die Vorteile einer Torsionsfeder, nämlich geringes Massenträgheitsmoment und insbesondere beidseitige dynamische Auslenkbarkeit der Feder hinsichtlich Oszillatorbetrieb gewährleistet, jedoch auf eine zur Drehachse des Ventilsteuerkörpers koaxiale Federposition verzichtet, mit der Möglichkeit, die federnde Länge der Torsionsfeder nicht ausschließlich parallel zur Drehachse des Ventilsteuerkörpers verlaufen zu lassen, um so die axiale Ventilbaugröße nicht von der Federlänge abhängig zu machen.

Gelöst wird die Aufgabe bei einem Drehventil der eingangs genannten Art dadurch, dass die Torsionsfeder derart gekrümmt ist, dass sie ein oder mehrere Torsionsachsen besitzt, die zur Drehachse des Ventilsteuerkörpers mindestens jeweils eine achsparallele und mindestens eine achssenkrechte Komponente aufweist, wobei die Torsionsfeder als Blattfeder ausgebildet ist.

Insbesondere bei einer gebogenen Gestaltung der Torsionsfeder sind Federabschnitte gebildet, deren Torsionsachsen sich durch Superpositionierung, somit durch Überlagerung von bezüglich der Drehachsen des Ventilsteuerkörpers achsparallelen und achssenkrechten Komponenten ergeben.

In einem Sonderfall können die ein oder mehreren Torsionsachsen der Torsionsfeder derart angeordnet sein, dass diese bezüglich der Drehachse des Ventilsteuerkörpers achsparallel oder achssenkrecht sind.

Das Drehventil kann grundsätzlich unterschiedlich gestaltet sein. Als bevorzugt wird die Gestaltung als Drehklappenventil angesehen. Es ist aber auch eine andere Gestaltung, wie eine Kugel- bzw. Walzengestaltung des Drehventils, denkbar.

Von besonderem Vorteil ist bei der erfindungsgemäßen Torsionsbiegefeder, dass die exzentrische, d. h. nicht koaxiale Anordnung der Torsionsfeder am Ventilsteuerkörper die Substitution der Hohlwelle durch eine Vollwelle ermöglicht. Diese Vollwelle ist insbesondere in Achsebene flach ausgeführt. Sie ist in Achsrichtung insbesondere nicht gewölbt gestaltet.

Bei einer Ausbildung des Ventilschließorgans als Klappe ist diese insbesondere flach ausgebildet. Damit kann eine in Achsebene flach ausgeführte Vollwelle eine ebenfalls flache Ventilklappe aufnehmen. Die flache Ventilklappe, deren Mittelebene in der Drehachse liegen kann, besitzt eine nicht unterbrochene Klappenumfangsfläche, die sich vorzüglich zur Abdichtung über einen engen Spalt zum Ventilgehäuse oder auch als berührende Anlagedichtfläche eignet. Liegen die umlaufenden Außenkanten der Klappe in parallelen Ebenen, die nur einen relativ geringen Abstand voneinander haben, stellt sich die Klappe als am Außenumfang flach dar. Die Herstellung und Montage einer flachen Ventilklappe und der korrespondierenden Welle gestalten sich gegenüber der gewölbten Klappe einschließlich einer Hohlwelle wesentlich einfacher. Die Biegesteifigkeit der flachen Ventilklappe kann mit geringer Zunahme des Massenträgheitsmoments durch eine die Welle schneidende oder kreuzende Profilstrebe erheblich vergrößert werden. Die Profilstrebe wird an ihren Enden mit der Klappe verbunden, beispielsweise durch Kleben, Nieten usw. und mittig vorteilhafterweise mit der Welle. Aus strömungsmechanischer Sicht ergibt sich für die flache Klappe, einschließlich Profilstrebe und flacher Vollwelle eine kleinere Stirnfläche im Gasstrom und gegenüber kreisrunden Hohlwellen auch ein besserer Strömungsbeiwert im Wellenbereich.

Die Klappe bildet insbesondere in ihrem Außenumfang zur Gehäuseinnenwand mittelbar oder unmittelbar einen engen Drosselspalt zur Leckagereduzierung.

Liegt die ventilsteuerkörperseitige Drehachse der Feder nicht mehr in der Drehachse des Ventilsteuerkörpers, so wandert die ventilsteuerkörperseitige Drehachse der Feder auf einer Kreisbahn, um die Drehachse des Ventilsteuerkörpers entsprechend der Federauslenkung. Einer exzentrisch angeordneten Torsionsfeder wird bei diesem Bewegungsvorgang neben einer Torsionsbelastung auch eine Biegebelastung aufgezwungen, so dass die Feder als Torsionsbiegefeder wirksam ist. Die in der Praxis oft vorteilhaften Exzentrizitäten der Federdrehachse verursachen Biegebeanspruchungen in der Torsionsfeder, die weit über den Dauerfestigkeiten üblicher Federwerkstoffe liegen.

Um eine unzulässige Biegebeanspruchung der Torsionsfeder zu vermeiden, ist gemäß einer bevorzugten Weiterbildung der Erfindung vorgesehen, dass die Torsionsachse der Feder nicht ausschließlich parallel zur Drehachse des Ventilsteuerkörpers verläuft, sondern gekrümmt ist und mindestens auch eine vertikale Achskomponente aufweist. In Superposition wirken somit die Drehachsenverlagerung der Feder und die aufeinander senkrecht stehenden Torsionsachsabschnitte bzw. Torsionsachsabschnitte mit aufeinander senkrecht stehenden Komponenten der Feder. Senkrechte Komponenten von Torsionsachsabschnitten ergeben sich auch bei windschiefer Stellung zweier Torsionsfederabschnitte.

Gemäß der Erfindung ist ferner vorgesehen, die Torsionsfeder als Blattfeder auszulegen, da somit ein Federquerschnittsprofil mit hoher Torsionssteifigkeit, aber niedriger Biegesteifigkeit zur Verfügung steht, um verbleibende geringe Biegebeanspruchungen beim Ablaufen der Verlagerungskreisbahn um die Drehachse des Ventilsteuerkörpers zu kompensieren. Unter Blattfeder wird hierbei ein Federprofil verstanden, das in der Ebene, die die Drehachse des Ventilsteuerkörpers und die Torsionsachse der Feder schneidet, eine geringere Materialstärke als in der Ebene senkrecht zu dieser besitzt. Die Biegebeanspruchungen resultieren aus der zur Blattfeder vertikalen Komponente der Drehachsenverlagerung, die den Abstand der Federenden geringfügig vergrößert. Die horizontale Komponente der Drehachsenverlagerung wird gänzlich durch Torsion der Feder aufgenommen. Krümmungen in der Geometrie der Torsionsbiegefeder werden bei wechselseitiger Torsionsbeanspruchung nicht gegen die Wickelrichtung dieser Krümmung beansprucht, womit die Gefahr eines Federbruches durch die Federkrümmungen selbst nicht erhöht wird. Insbesondere sind durch die Federblattgeometrie sehr einfach unterschiedliche räumliche Federkrümmungen herstellbar. Die Feder besteht vorzugsweise jedoch aus L- und/oder U- und/oder Z- und/oder Ω- und/oder Drall-Profilierungen bzw. besitzt aus diesen Profilierungen superponierte Gestaltungen. Die Feder- enden der Blattfeder können durch Schraub-, Klemm- oder Nietverbindungen einfach befestigt werden.

Das Federquerschnittsprofil kann unterschiedlich gestaltet sein. Es wird als besonders vorteilhaft angesehen, wenn das Federquerschnittsprofil rechteckig, elliptisch oder polygonal ist. Die Federlänge kann variabel sein. Vorzugsweise ist die Feder als Blattfederprofil, insbesondere Rechteckprofil gestaltet.

Bei der vorgesehenen Torsionsfeder bzw. Torsionsbiegefeder kann gemäß einer bevorzugten Weiterbildung der Federquerschnitt über die Länge der Feder variabel gestaltet sein. Dies ermöglicht es, die Feder über deren Länge unter dem Aspekt der unterschiedlichen Torsionsbeanspruchung zu optimieren, womit die Dauerfestigkeit der Feder signifikant erhöht und Masse eingespart werden kann. Die Feder kann aus gebräuchlichen Federstählen, aber auch unter korrosiver Atmosphäre aus Bronze, Messing, Hastelloy, Nimonic usw. hergestellt werden. Ebenso ist ein Material aus Verbundwerkstoffen (z. B. CfK oder GfK) für die Feder anwendbar, wobei durch entsprechenden Faserverlauf im Verbundwerkstoff vielfältige Variationsmöglichkeiten hinsichtlich der lokalen Federsteifigkeit bestehen.

Es gibt Formen von Federkrümmungen, die an einem oder beiden Federenden bei Federauslenkung eine Drehung des jeweiligen Federendes um eine Achse senkrecht zur Torsionsebene des entsprechenden Federendes hervorrufen. Die notwendige Drehbarkeit kann entweder durch einen elastischen Abschnitt der Feder (z. B. Ω-Form) selbst, durch ein oder mehrere weitere Federelemente oder durch drehbare Lagerstellen erreicht werden.

So ist gemäß einer bevorzugten Weiterbildung des erfindungsgemäßen Drehventils vorgesehen, dass sich an einem gehäuseseitigen Teil ein Lagerzapfen befindet, um den sich das Federende einschließlich Lagerbock drehen kann. Ein ähnlicher Drehmechanismus lässt sich alternativ bzw. zusätzlich auch am klappenseitigen Federende anbringen, wobei in diesem Fall die Massenträgheit des Federsystems spürbar vergrößert wird.

Als besonders vorteilhaft wird es angesehen, wenn das jeweilige drehbare Federende der Torsionsfeder hinsichtlich seiner zur Drehachse des Ventilsteuerkörpers senkrechten Achskomponente die Drehbarkeit durch ein mit dem Federende unmittelbar oder durch weitere Bauteile miteinander verbundenes Gleitund/oder Wälzlager und/oder elastische Verformungen des Federendes selbst und/oder elastische Verformung ein oder mehrerer Bauteile, die das Federende mit dem Ventilgehäuse bzw. Ventilsteuerkörper verbinden, bewirkt.

Die sich aus dem Torsionswinkel, der Werkstoffbelastung und dem Rückstellemoment der Feder ergebene federnde Länge kann entsprechend dem Federkrümmungsprofil in geeignete Raumbereiche umgelenkt werden, wie beispielsweise durch eine Federkrümmung in U-Form zwei nicht unbedingt gleichlange parallele Torsionsfederabschnitte entstehen. Die Gesamtlänge der Feder fällt in Richtung der Drehachse des Ventilsteuerkörpers wesentlich kürzer aus, als die einer gestreckten Feder mit geradliniger Torsionsachse.

Das am Ventilsteuerkörper befestigte Federende ist insbesondere näher an der Drehachse des Ventilsteuerkörpers positioniert als das Federenede, das mittelbar oder unmittelbar mit dem Ventilgehäuse verbunden ist.

Das Federrückstellmoment der Torsionsfeder wirkt vorzugsweise entweder ausschließlich in eine Bewegungsrichtung des Ventilsteuerkörpers, somit als Rückschlagventil, oder es wirkt ein Federrückstellmoment aus einer momentneutralen Zwischenstellung des Ventilsteuerkörpers aus beiden Bewegungsrichtungen des Ventilsteuerkörpers rückstellend, womit sich ein schwingender Oszillator ergibt.

Ist die Feder als einseitig wirkende Rückstellfeder für den Ventilsteuerkörper ausgelegt, ermöglicht die Federauslenkung ein Drehventil mit hoher Schaltgeschwindigkeit in die Richtung des wirkenden Federmoments zu schaffen.

Die Feder kann sowohl außerhalb des gasführenden Ventilbereiches, als auch innerhalb desselben positioniert werden, wobei sich mit Blattfederprofilen und deren Gasanströmung auf der schmalen Profilseite äußerst geringe Strömungsverlustbeiwerte ergeben. In Verbindung mit einem flachen und strömungsoptimierten Profil der Ventilwelle und einer ebenen Ventilklappe lassen sich die Strömungsverluste gegenüber einer Hohlwelle mit gekrümmter Ventilklappe erheblich verbessern. Die Entscheidung, die Feder innerhalb bzw. außerhalb des gasführenden Ventilraumes unterzubringen, wird primär von dem zur Verfügung stehenden Bauraum und dem Antriebskonzept entschieden werden. Die erörterte Ausführung eignet sich besonders für die engen Einbauverhältnisse im Einlassbereich an Zylinderköpfen von Verbrennungsmotoren.

Der Antrieb des Drehventils ist unabhängig vom Energiespeicher, somit der Feder zu betrachten und kann mechanisch, pneumatisch, hydraulisch, elektromagnetisch oder piezoelektrisch oder in Kombination oben genannter Antriebsmöglichkeiten erfolgen. Beispielsweise ist ein elektromagnetischer Antrieb für das Drehventil in Form von zwei Elektromagneten mit dazugehörigen Statoren vorgesehen. Die Elektromagnete ziehen bei Bestromung den mit der Welle verbundenen Anker an, bis die jeweilige Ankerfläche die Polfläche des korrespondierenden Stators berührt. Die Anlage des Ankers auf den entsprechenden Stator begrenzt die Auslenkung des Ventilsteuerkörpers und die Torsion der Feder.

Bevorzugte Weiterbildungen der Erfindung und deren Vorteil ergeben sich aus den Unteransprüchen, der nachfolgenden Beschreibung der Figuren sowie den Figuren selbst. Es wird hierbei bemerkt, dass alle Einzelmerkmale und alle Kombinationen von Einzelmerkmale erfindungswesentlich sind.

In den Figuren ist die Erfindung anhand eines als Drehklappenventil gestalteten Drehventils bei unterschiedlich gestalteten Torsionsfedern veranschaulicht. Es zeigen:
- Figur 1: ein Drehklappenventil mit Torsionsfeder in U-Form mit drehbarem Federende, flacher Ventilklappe auf flacher Welle, in schräger Sei- tenansicht,
- Figur 2: das in Figur 1 veranschaulichte Drehklappenventil in einer Drauf- sicht,
- Figur 3: das in den Figuren 1 und 2 veranschaulichte Drehklappenventil im Längsschnitt mit zusätzlich gezeigtem bipolarem elektromagneti- schem Antrieb und Strömungslinien,
- Figur 4: das in den Figuren 1 bis 3 veranschaulichte Drehklappenventil in einem senkrechten Querschnitt,
- Figur 5: eine gegenüber der Ausführungsform nach den Figuren 1 bis 4 modifizierte Gestaltung der Torsionsfeder, die Z-förmig ist,
- Figur 6: im Unterschied zur Darstellung in Figur 5 eine Torsionsfeder in Ω- Form,
- Figur 7: das Drehklappenventil gemäß Figur 3 in einer schrägen Seitenan- sicht,
- Figur 8: eine Modifizierung des in Figur 7 gezeigten Drehklappenventils bei dem die flache Ventilklappe mit einer Profilstrebe versehen ist, in schräger Draufsicht des Ventils,

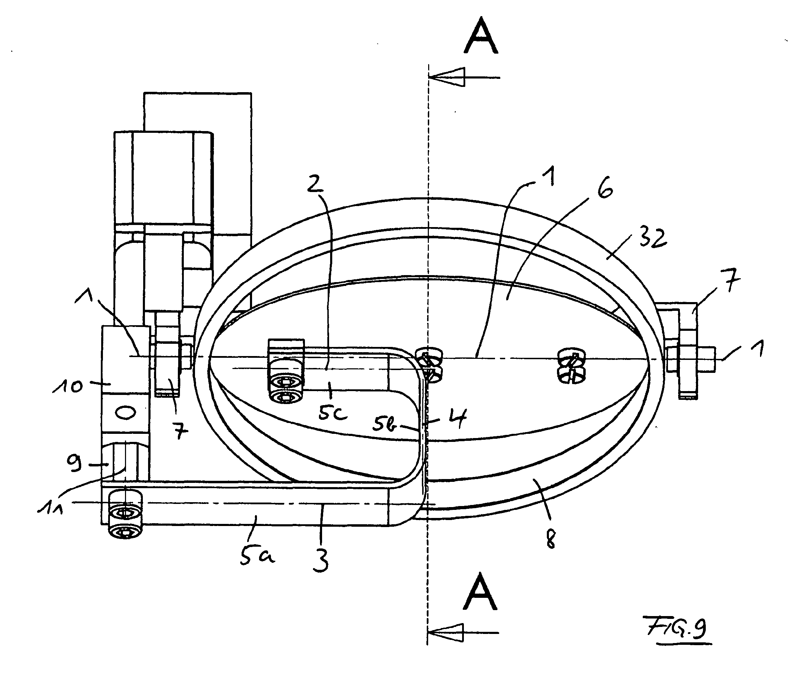

- Figur 9: das Drehklappenventil gemäß der Figuren 1 und 2, in Strömungs- richtung gesehen,

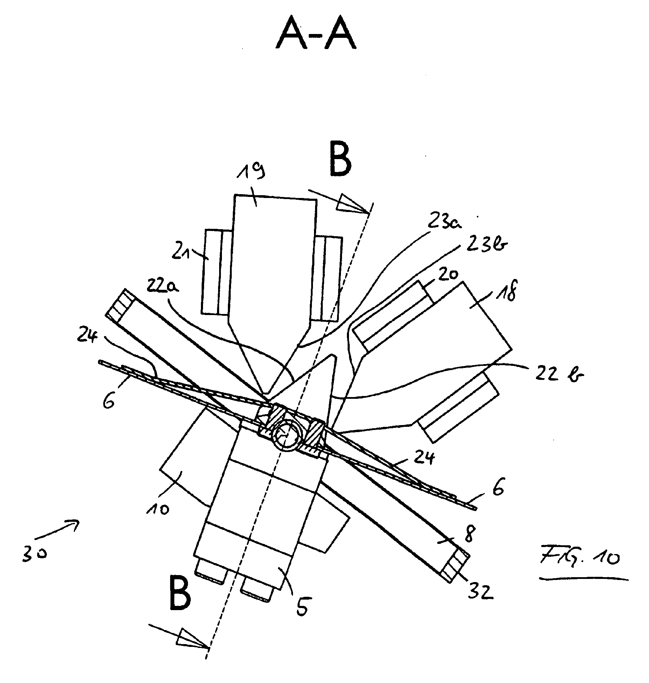

- Figur 10: einen Schnitt durch das in Figur 9 gezeigte Drehklappenventil ge- mäß der Linie A-A und

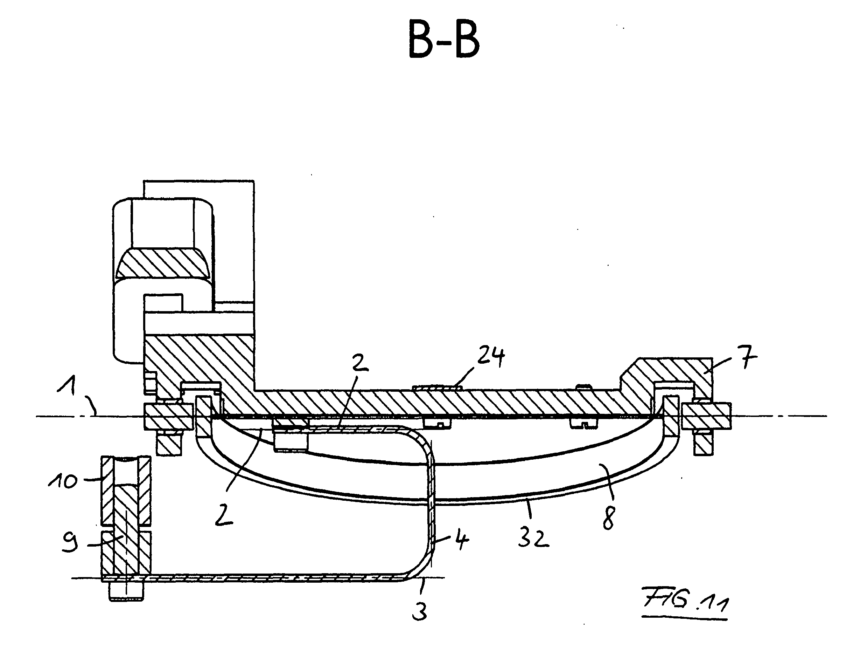

- Figur 11: einen Schnitt durch das in der Figur 10 gezeigte Drehklappenventil gemäß der Linie B-B.

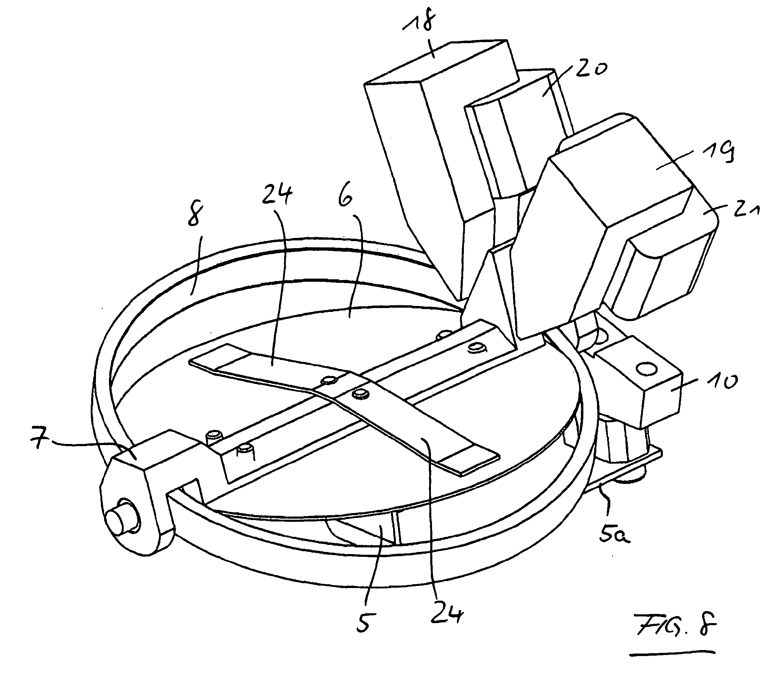

Gezeigt ist ein Drehklappenventil 30 mit einem Ventilgehäuse 31. Dieses weist einen Gehäuseabschnitt 32 mit einer Gehäuseinnenwand 8 auf. Diese begrenzt eine kreisförmige Durchströmöffnung 33, die mittels einer flachen Ventilklappe 6 verschließbar ist. Die plattenförmige Ventilklappe 6 ist mit einer Vollwelle 7 verschraubt. Die Welle 7 ist in ihrer Achsebene, somit in deren Drehachse 1 flach ausgeführt, um die flache Ventilklappe 6 aufzunehmen. Klappe 6 und Welle 7 bilden einen Ventilsteuerkörper 17. Die flache Ventilklappe 6, deren Mittelebene in der Drehachse 1 liegen kann, besitzt eine nicht unterbrochene Klappenumfangsfläche 12 zur Abdichtung über einen engen Spalt zur Gehäuseinnenwand 8 oder auch als berührende Anlagedichtfläche. Die Biegesteifigkeit der flachen Klappe 6 lässt sich mit geringer Zunahme des Massenträgheitsmoments durch eine die Welle 7 umlaufende Profilstrebe 24, wie es in der Figur 8 verdeutlicht ist, erheblich vergrößern. Die Profilstrebe 24 ist an ihren Enden mit der Klappe 6 verbunden, beispielsweise durch Kleben, Nieten und dergleichen und zwar vorteilhafterweise mittig mit der Welle 7.

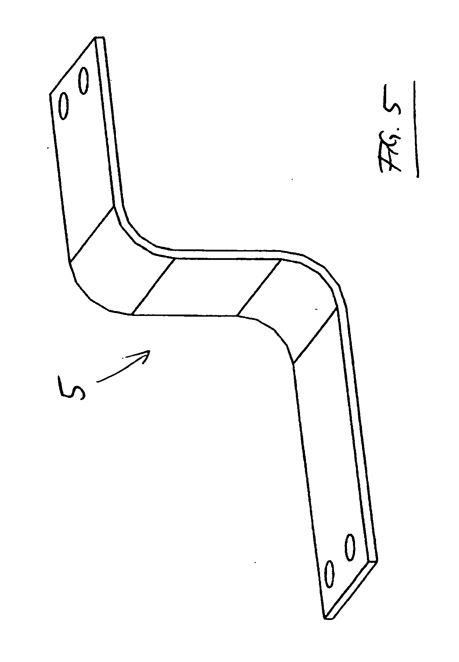

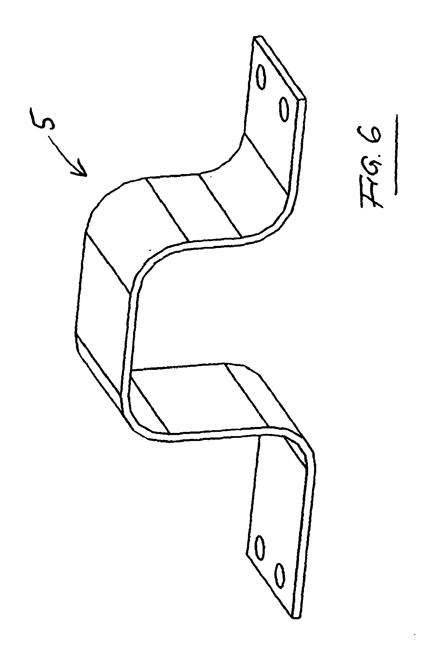

Das Ventilgehäuse 31 weist ferner einen Gehäuseabschnitt 10 auf, der der Lagerung einer Torsionsfeder 5 dient, die bis auf die Ausführungsbeispiele gemäß der Figuren 5 und 6 U-förmig ausgebildet ist. Die Torsionsfeder 5 weist Torsionsfederabschnitte 5a, 5b und 5c auf, wobei der Torsionsfederabschnitt 5a einen langen Schenkel des U, der Torsionsfederabschnitt 5c einen kürzeren Schenkel des U und der Torsionsfederabschnitt 5b den die beiden Torsionsfederabschnitte 5a und 5c verbindenden Steg darstellt. Die Torsionsfeder 5 ist im Bereich des Torsionsfederabschnitts 5c mit dem Ventilsteuerkörper 17 im Bereich der Ventilklappe 6 verbunden, insbesondere verschraubt. Die Torsionsfeder 5 ist des Weiteren im Bereich des Torsionsfederabschnitts 5a über eine drehbare Lagerstelle 9 mit dem radial außerhalb des Gehäuseabschnitts 32 angeordneten Gehäuseabschnitt 10 des Ventilgehäuses 31 verbunden.

Demnach ist das eine Ende 15 der Torsionsfeder 5 am beweglichen Ventilsteuerkörper 17 und das andere Ende 14 der Feder 5 am einem Ort des Drehklappenventils 30 befestigt, der eine Verformung der Feder 5 beim Bewegen des Ventilsteuerkörpers 17 erlaubt.

Die Torsionsfeder 5 ist derart gekrümmt, dass sie ein oder mehrere Torsionsachsen, vorliegend die den Torsionsfederabschnitten 5a, 5b und 5c zugeordneten Torsionsachsen 2, 3 und 4 besitzt, die zur Drehachse 1 des Ventilsteuerkörpers 17 mindestens jeweils eine achsparallele und mindestens eine achssenkrechte Komponente aufweist. Bei dem gezeigten Ausführungsbeispiel mit der U-förmig gestalteten Torsionsfeder 5 ist die jeweilige Torsionsachse 2 bzw. 3 im Wesentlichen achsparallel zur Drehachse 1 des Ventilsteuerkörpers 17 und die Torsionsachse 4 im Wesentlichen achssenkrecht zur Drehachse 1.

Bei dem veranschaulichten Drehklappenventil 30 liegt die ventilsteuerkörperseitige Drehachse 2 der Feder 5 nicht mehr in der Drehachse 1 des Ventilsteuerkörpers 17. Demnach wandert die Drehachse 2 auf einer Kreisbahn 16 um die Achse 1 entsprechend der Federauslenkung. Der exzentrisch angeordneten Torsionsfeder 5 wird bei diesem Bewegungsvorgang neben einer Torsionsbelastung auch eine Biegebelastung aufgezwungen. Um eine unzulässige Biegebeanspruchung der Torsionsfeder 5 zu verhindern, verläuft die Torsionsachse 2 der Feder 5 nicht ausschließlich parallel zur Drehachse 1 des Ventilsteuerkörpers 17, sondern ist gekrümmt und weist mindestens auch die vertikale Achskomponente 4 auf. Der Drehachsenverlagerung der Feder 5 wird somit von den aufeinander senkrecht stehenden Torsionsachsabschnitten 2, 3, 4 bzw. Torsionsachsabschnitten mit aufeinander senkrecht stehenden Komponenten der Feder 5 gefolgt, die in Superposition wirken.

Die Torsionsfeder 5 ist als Blattfeder ausgelegt. Sie stellt somit ein Federquerschnittsprofil mit hoher Torsionssteifigkeit, aber niedriger Biegesteifigkeit zur Verfügung, um bleibende geringe Biegebeanspruchungen beim Ablaufen der Verlagerungskreisbahn 16 um die Achse 1 zu kompensieren. Als Blattfeder wird ein Federprofil bezeichnet, dass in der Ebene, die die Achsen 1 und 2 schneidet, geringere Materialstärke als in der Ebene senkrecht zu dieser besitzt. Die Biegebeanspruchungen resultieren aus der zur Blattfeder 5 vertikalen Komponente der Drehachsenverlagerung, die den Abstand der Federenden 14, 15 geringfügig vergrößert. Die horizontale Komponente der Drehachsenverlagerung wird gänzlich durch Torsion der Feder aufgenommen. Krümmungen in der Geometrie der Torsionsfeder bzw. Torsionsbiegefeder werden bei wechselseitiger Torsionsbeanspruchung, nicht gegen die Wickelrichtung dieser Krümmung beansprucht, womit die Gefahr eines Federbruches durch die Federkrümmung selbst nicht erhöht wird.

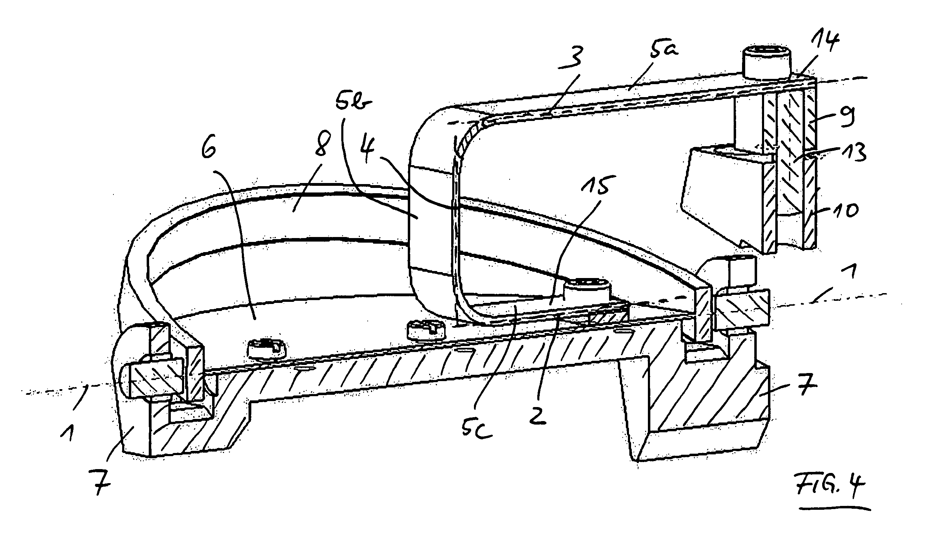

Durch diese Federblattgeometrie sind sehr einfach unterschiedliche räumliche Federkrümmungen, beispielsweise in L-, U-, Z-, Ω-Form und dergleichen oder überlagerte Formen herstellbar. Die Federenden der Blattfeder können durch Schraub-, Klemm- oder Nietverbindungen einfach befestigt werden. Figur 4 zeigt eine Blattfeder in Z-Form, Figur 6 eine Blattfeder in Ω-Form.

Es gibt Formen von Federkrümmungen, die bei Federauslenkung eine Biegebeanspruchung am gehäuseseitig fest eingespannten Federende 14 um eine Achse 11, die senkrecht zur Torsionsebene des Federendes 14 steht, hervorrufen. Eine entsprechende Biegebeanspruchung am Ventilsteuerkörper fest eingespannten Federende 15 kann ebenfalls um eine fiktive Achse, die senkrecht zur Torsionsebene des Federendes 15 steht, auftreten. In beiden Fällen kann die Biegebeanspruchung des entsprechenden Federendes 14, 15 durch Drehbarkeit um die Achse 11 am Federende 14 bzw. um entsprechende fiktive Achse am Federende 15 entweder durch einen elastischen Abschnitt der Feder (z.B. Omega-Form gemäß Figur 6) selbst, durch ein oder mehrere weitere Federelemente oder durch eine oder mehrere drehbare Lagerstellen, wie sie insbesondere in Figur 4 veranschaulicht ist, eliminiert werden.

Wie dieser Figur zu entnehmen ist, befindet sich an dem Gehäuseabschnitt 10 ein Lagerzapfen 13, um den sich das Federende 14 einschließlich Lagerbock 9 drehen kann. Ein ähnlicher Drehmechanismus lässt sich alternativ bzw. zusätzlich auch am klappenseitigen Federende 15 anbringen, wobei in diesem Fall die Massenträgheit des Federsystems spürbar vergrößert wird.

Die sich aus dem Torsionswinkel, der Werkstoffbelastung und dem Rückstellmoment der Feder ergebene ferdernde Länge kann entsprechend dem Federkrümmungsprofil in geeignete Raumbereiche umgelenkt werden, wie beispielsweise durch eine Federkrümmung in U-Form zwei nicht unbedingt gleichlange parallele Torsionsfederabschnitte 5a, 5c entstehen. Die Gesamtlänge der Feder 5 fällt in Richtung der Achse 1 wesentlich kürzer aus, als die einer gestreckten Feder mit geradliniger Torsionsachse.

Die Torsionsfeder 5 kann auch als einseitig wirkende Rückstellfeder mit den Ventilsteuerkörper 17 ausgelegt werden. Diese Federauslegung ermöglicht ein Drehventil mit hoher Schaltgeschwindigkeit in die Richtung des wirkenden Federmoments.

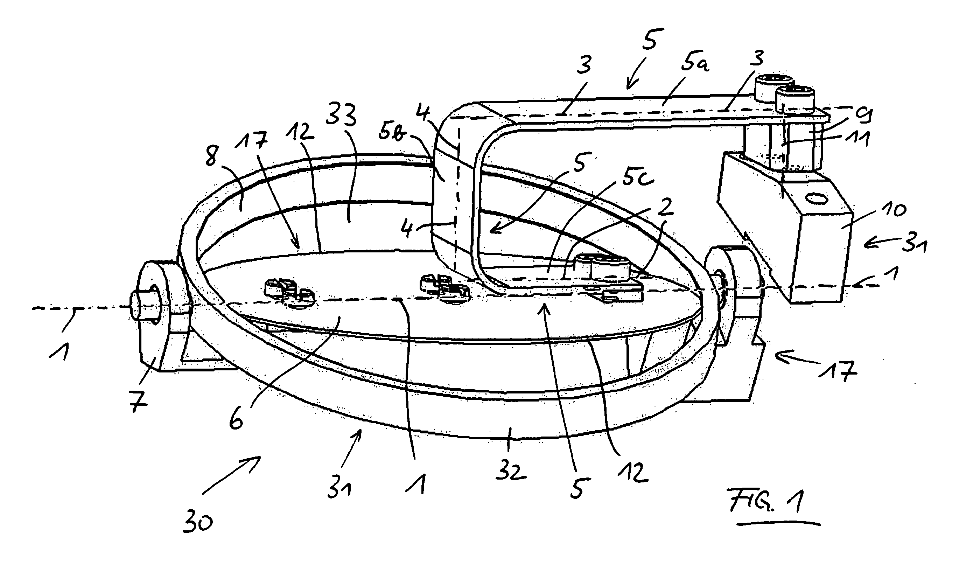

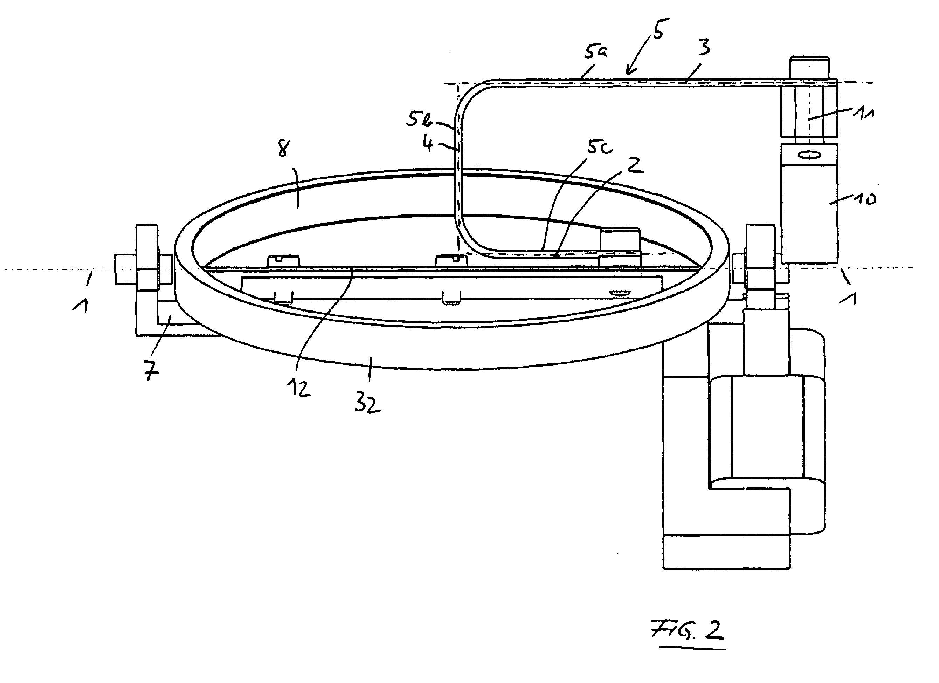

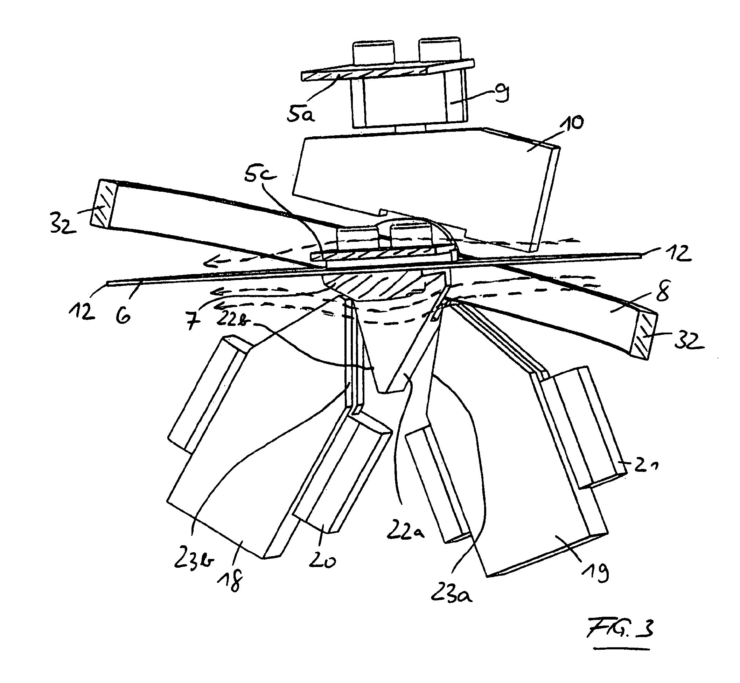

Die Torsionsfeder 5 kann sowohl außerhalb des gasführenden Ventilbereichs, als auch innerhalb desselben positioniert werden (siehe Figur 2), wobei sich mit dem Blattfederprofil und deren Gasanströmung auf der schmalen Profilseite äußerst geringe Strömungsverlustbeiwerte ergeben. In Verbindung mit einem flachen und strömungsoptimierten Profil der Ventilwelle 7 und einer ebenen Ventilklappe 6, wie es insbesondere der Darstellung der Figur 3 zu entnehmen ist, lassen sich die Strömungsverluste gegenüber einer Hohlwelle mit gekrümmter Ventilklappe erheblich verbessern. Die in den Figuren 1 bis 4 dargestellte Ausführung eignet sich besonders für die engen Einbauverhältnisse im Einlassbereich an Zylinderköpfen von Verbrennungsmotoren.

Bei dem Drehklappenventil handelt es sich insbesondere um ein solches, das oszillierend und gasführend ist.

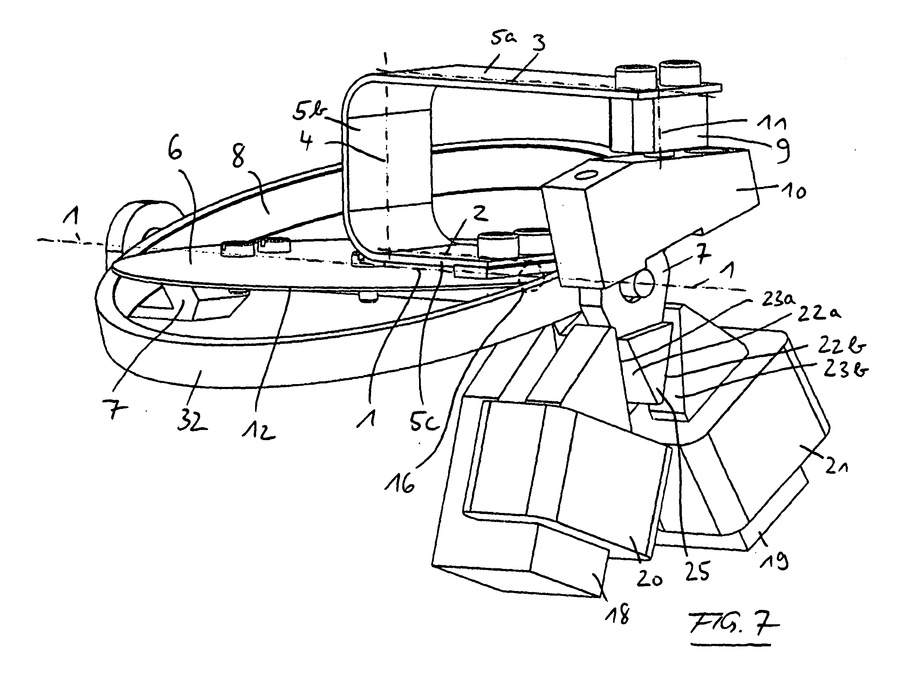

Die Figuren 3 und 7 zeigen einen elektromagnetischen Antrieb für das Drehklappenventil 30 in Form zweier Elektromagnete 20, 21 mit den zugehörigen Statoren 18, 19. Die Elektromagnete 20, 21 ziehen bei Bestromung den mit der Welle 7 verbundenen Anker 25 an, bis die jeweilige Ankerfläche 22a, 22b die Polfläche 23a, 23b des korrespondierenden Stators 18, 19 berührt. Die Anlage des Ankers 25 auf den entsprechenden Stator 18, 19 begrenzt die Auslenkung des Ventilsteuerkörpers 17 und die Torsion der Torsionsfeder 5.

Sofern vorstehend beschriebene technische Merkmale im Zusammenhang mit Bezugsziffern erörtert sind, sind diese Bezugsziffern lediglich dafür da, die Verständlichkeit des Textes zu erhöhen und dementsprechend beschränken solche Bezugsziffern die Interpretation des jeweiligen, mit einer solchen Bezugsziffer versehenen Bauteils nicht.

## Patentansprüche

1. Gasführendes Drehventil (30) mit einer Torsionsfeder (5) als Energiespeicher, wobei ein Ende (15) der Torsionsfeder (5) an einem um eine Drehachse (1) beweglichen Ventilsteuerkörper (17), der ein Ventilschließorgan (6) und eine Welle (7) aufweist, und das andere Ende (14) der Torsionsfeder (5) an einem Ort des Drehventils (30), der eine Verformung der Feder (5) beim Bewegen des Ventilsteuerkörpers (17) erlaubt, befestigt ist, **dadurch gekennzeichnet, dass** die Torsionsfeder (5) derart gekrümmt ist, dass sie ein oder mehrere Torsionsachsen (2, 3, 4) besitzt, die zur Drehachse (1) des Ventilsteuerkörpers (17) mindestens jeweils eine achsparallele Komponente und mindestens eine achssenkrechte Komponente aufweist, wobei die Torsionsfeder (5) als Blattfeder ausgebildet ist.

2. Drehventil nach Anspruch 1, **dadurch gekennzeichnet, dass** mindestens ein Federende (14) der Torsionsfeder (5) drehbar um eine Achse (11) ist, die eine senkrechte Komponente zu der Drehachse (1) des Ventilsteuerkörpers (17) besitzt.

3. Drehventil nach Anspruch 2, **dadurch gekennzeichnet, dass** das jeweilige drehbare Federende (14 bzw. 15) der Torsionsfeder (5) hinsichtlich seiner zur Drehachse (1) des Ventilsteuerkörpers (17) senkrechten Komponente der Achse (11) die Drehbarkeit durch ein mit dem Federende (14 bzw. 15) unmittelbar oder durch weitere Bauteile miteinander verbundenes Gleit- und/oder Wälzlager und/oder elastische Verformung des Federendes (14 bzw. 15) selbst und/oder elastischer Verformung ein oder mehrere Bauteile, die das Federende (14 bzw. 15) mit dem Ventilgehäuse (10) bzw. dem Ventilsteuerkörper (17) verbinden, bewirkt.

4. Drehventil nach einem der Ansprüche 1 bis 3, **dadurch gekennzeichnet, dass** das Querschnittsprofil der Torsionsfeder (5) rechteckig, elliptisch oder polygonal gestaltet ist.

5. Drehventil nach einem der Ansprüche 1 bis 4, **dadurch gekennzeichnet, dass** die Federkrümmung aus L- und/oder U- und/oder Z- und/oder Ω- und/oder Drall-Profilierungen besteht oder aus diesen Profilierungen superponierte Gestaltungen besitzt.

6. Drehventil nach einem der Ansprüche 1 bis 5, **dadurch gekennzeichnet, dass** ein Federrückstellmoment der Torsionsfeder (5) entweder ausschließlich in eine Bewegungsrichtung des Ventilsteuerkörpers (17) wirkt oder ein Federrückstellmoment der Torsionsfeder (5) aus einer momentneutralen Zwischenstellung des Ventilsteuerkörpers (17) aus beiden Bewegungsrichtungen des Ventilsteuerkörpers (17) rückstellend wirkt.

7. Drehventil nach einem der Ansprüche 1 bis 6, **dadurch gekennzeichnet, dass** sich die Einbauposition der Torsionsfeder (5) innerhalb und/oder außerhalb des gasführenden Ventilraums und des Drehventils (30) befindet.

8. Drehventil nach einem der Ansprüche 1 bis 7, **dadurch gekennzeichnet, dass** die Torsionsfeder (5) aus einer oder mehreren Einzelfedern oder einer oder mehreren Einzelfedern und Bindegliedern besteht.

9. Drehventil nach einem der Ansprüche 1 bis 8, **dadurch gekennzeichnet, dass** das am Ventilsteuerkörper (17) befestigte Federende (15) näher an der Drehachse (1) des Ventilsteuerkörpers (17) sitzt, als das Federende (14), das mittelbar oder unmittelbar mit dem Ventilgehäuse (31) verbunden ist.

10. Drehventil nach einem der Ansprüche 1 bis 9, **dadurch gekennzeichnet, dass** das Verschließorgan (6) als Klappe ausgebildet ist.

11. Drehventil nach Anspruch 10, **dadurch gekennzeichnet, dass** die Klappe (6) flach ausgebildet ist und die Welle (7) vorzugsweise als Vollwelle ausgebildet ist, wobei die Welle (7) flach ausgeführt ist, um die Ventilklappe (6) aufzunehmen.

12. Drehventil nach Anspruch 10 oder 11, **dadurch gekennzeichnet, dass** die Torsionsfeder (5) mit der Klappe (6) verbunden ist und die Klappe (6) an ihrem Außenumfang (12) zur Gehäuseinnenwand (8) mittelbar oder unmittelbar einen engen Drosselspalt zur Leckagereduzierung bildet.

13. Drehventil nach einem der Ansprüche 10 bis 12, **dadurch gekennzeichnet, dass** die umlaufenden Außenkanten der Klappe (6) in parallelen Ebenen liegen.

14. Drehventil nach einem der Ansprüche 10 bis 13, **dadurch gekennzeichnet, dass** die Ventilklappe (6) mit einer Profilstrebe (24) versteift ist.

## Claims

1. Gas-carrying rotary valve (30) with a torsion spring (5) as an energy accumulator, one end (15) of the torsion spring (5) being fastened to a valve control body (17) movable about an axis of rotation (1) and having a valve-closing member (6) and a shaft (7), and the other end (14) of the torsion spring (5) being fastened at a location on the rotary valve (30) which allows deformation of the spring (5) during the movement of the valve control body (17), **characterized in that** the torsion spring (5) is curved in such a way that it possesses one or more torsion axes (2, 3, 4) which has or have with respect to the axis of rotation (1) of the valve control body (17) in each case at least one axially parallel component and at least one axially perpendicular component, the torsion spring (5) being designed as a leaf spring.

2. Rotary valve according to Claim 1, **characterized in that** at least one spring end (14) of the torsion spring (5) is rotatable about an axis (11) which possesses a perpendicular component to the axis of rotation (1) of the valve control body (17).

3. Rotary valve according to Claim 2, **characterized in that** the respective rotatable spring end (14 or 15) of the torsion spring (5), in terms of its components of the axis (11) perpendicular to the axis of rotation (1) of the valve control body (17), brings about rotatability by means of a plain and/or a rolling bearing connected to the spring end (14 or 15) directly or by means of further components to one another and/or by means of the elastic deformation of the spring end (14 or 15) itself and/or the elastic deformation of one or more components connecting the spring end (14 or 15) to the valve housing (10) or to the valve control body (17).

4. Rotary valve according to one of Claims 1 to 3, **characterized in that** the cross-sectional profile of the torsion spring (5) has a rectangular, elliptical or polygonal configuration.

5. Rotary valve according to one of Claims 1 to 4, **characterized in that** the spring curvature consists of L- and/or U- and/or Z- and/or Ω- and/or twist profiling or possesses configurations superposed from these profilings.

6. Rotary valve according to one of Claims 1 to 5, **characterized in that** either a spring restoring movement of the torsion spring (5) acts solely in one direction of movement of the valve control body (17) or a spring restoring movement of the torsion spring (5) acts with restoring effect out of a moment-neutral intermediate position of the valve control body (17) from both directions of movement of the valve control body (17).

7. Rotary valve according to one of Claims 1 to 6, **characterized in that** the installation position of the torsion spring (5) is located inside and/or outside the gas-carrying valve space and the rotary valve (30).

8. Rotary valve according to one of Claims 1 to 7, **characterized in that** the torsion spring (5) consists of one or more individual springs or of one or more individual springs and binding members.

9. Rotary valve according to one of Claims 1 to 8, **characterized in that** the spring end (15) fastened to the valve control body (17) is seated nearer to the axis of rotation (1) of the valve control body (17) than the spring end (14) which is connected indirectly or directly to the valve housing (31).

10. Rotary valve according to one of Claims 1 to 9, **characterized in that** the valve-closing member (6) is designed as a flap.

11. Rotary valve according to Claim 10, **characterized in that** the flap (6) is designed to be flat and the shaft (7) is preferably designed as a solid shaft, the shaft (7) having a flat form so as to receive the valve flap (6).

12. Rotary valve according to Claim 10 or 11, **characterized in that** the torsion spring (5) is connected to the flap (6), and the flap (6) indirectly or directly forms on its outer circumference (12), with respect to the housing inner wall (8), a narrow throttle gap for the reduction of leakage.

13. Rotary valve according to one of Claims 10 to 12, **characterized in that** the peripheral outer edges of the flap (6) lie in parallel planes.

14. Rotary valve according to one of Claims 10 to 13, **characterized in that** the valve flap (6) is stiffened by means of a profile strut (24).

## Revendications

1. Vanne rotative (30) pour le transport de gaz,
présentant un ressort de torsion (5) comme accumulateur d'énergie,
une extrémité (15) du ressort de torsion (5) étant fixée à un corps (17) de commande de vanne mobile autour d'un axe de rotation (1) et doté d'un organe (6) de fermeture de vanne et d'un arbre (7), l'autre extrémité (14) du ressort de torsion (5) étant fixée en un emplacement de la vanne rotative (30) qui permet une déformation du ressort (5) lorsque le corps (17) de commande de vanne se déplace,
**caractérisée en ce que**
le ressort de torsion (5) est cintré de manière à posséder un ou plusieurs axes de torsion (2, 3, 4) qui présentent chacun par rapport à l'axe de rotation (1) du corps (17) de commande de vanne au moins une composante parallèle à l'axe et au moins une composante perpendiculaire à l'axe, le ressort de torsion (5) étant configuré comme ressort à lame.

2. Vanne rotative selon la revendication 1, **caractérisée en ce qu'**au moins une extrémité (14) du ressort de torsion (5) peut tourner autour d'un axe (11) qui possède une composante perpendiculaire à l'axe de rotation (1) du corps (17) de commande de vanne.

3. Vanne rotative selon la revendication 2, **caractérisée en ce que** la capacité de tourner de la composante de l'axe (11) perpendiculaire à l'axe de rotation (1) du corps (17) de commande de vanne de chaque extrémité rotative (14 ou 15) du ressort de torsion (5) est assurée par l'intermédiaire d'un palier coulissant et/ou d'un palier de roulement relié directement ou par l'intermédiaire d'autres composants à l'extrémité (14 ou 15) du ressort, par déformation élastique de l'extrémité (14 ou 15) proprement dite du ressort et/ou par déformation élastique d'un ou de plusieurs autres composants qui relient l'extrémité (14 ou 15) du ressort au boîtier (10) de la vanne ou au corps (17) de commande de la vanne.

4. Vanne rotative selon l'une des revendications 1 à 3, **caractérisée en ce que** le profil de la section transversale du ressort de torsion (5) est rectangulaire, elliptique ou polygonal.

5. Vanne rotative selon l'une des revendications 1 à 4, **caractérisée en ce que** la courbure du ressort est constituée de profils en L, en U, en Z, en Ω et/ou de torsion ou possède une configuration dans laquelle ces profils sont superposés.

6. Vanne rotative selon l'une des revendications 1 à 5, **caractérisée en ce que** le couple de rappel du ressort de torsion (5) agit exclusivement dans une direction de déplacement du corps (17) de commande la vanne ou **en ce que** le couple de rappel du ressort de torsion (5) agit à partir d'une position intermédiaire, à couple neutre, du corps (17) de commande de la vanne par rappel du corps (17) de commande de la vanne dans les deux directions de déplacement.

7. Vanne rotative selon l'une des revendications 1 à 6, **caractérisée en ce que** la position de montage du ressort de torsion (5) est située à l'intérieur et/ou à l'extérieur de l'espace de guidage de gaz de la vanne et à l'intérieur et/ou à l'extérieur de la vanne rotative (30).

8. Vanne rotative selon l'une des revendications 1 à 7, **caractérisée en ce que** le ressort de torsion (5) est constitué d'un ou plusieurs ressorts distincts ou d'un ou plusieurs ressorts distincts et organes de liaison.

9. Vanne rotative selon l'une des revendications 1 à 8, **caractérisée en ce que** l'extrémité (15) du ressort fixée au corps (17) de commande de la vanne est située plus près de l'axe de rotation (1) du corps (17) de commande de la vanne que l'extrémité (14) du ressort reliée directement ou indirectement au boîtier (31) de la vanne.

10. Vanne rotative selon l'une des revendications 1 à 9, **caractérisée en ce que** l'organe de fermeture (6) est configuré comme clapet.

11. Vanne rotative selon la revendication 10, **caractérisée en ce que** le clapet (6) est plat et **en ce que** l'arbre (7) est configuré de préférence comme arbre plein, l'arbre (7) étant aplati pour reprendre le clapet (6) de la vanne.

12. Vanne rotative selon les revendications 10 ou 11, **caractérisée en ce que** le ressort de torsion (5) est relié au clapet (6) et **en ce que** le clapet (6) forme directement ou indirectement à sa périphérie extérieure (12) et par rapport à la paroi intérieure (8) du boîtier un étroit interstice d'étranglement destiné à réduire les fuites.

13. Vanne rotative selon l'une des revendications 10 à 12, **caractérisée en ce que** les bords extérieurs périphériques du clapet (6) sont situés dans des plans parallèles.

14. Vanne rotative selon l'une des revendications 10 à 13, **caractérisée en ce que** le clapet (6) de la vanne est rigidifié par un renfort profilé (24).
